# EUROPEAN PATENT APPLICATION

(11) **EP 4 827 168 A1**
(43) Date of publication of application: **21.10.2026**
(21) Application number: 25171168.5
(22) Date of filing: 17.04.2025
(51) Int. Cl.: H04W 28/26, H04L 47/724

(54) **RESOURCE RESERVATION IN RADIO NETWORKS**

(71) Applicant: Siemens Aktiengesellschaft, 80333 München (DE)
(72) Inventor: Meisinger, Andreas, 92287 Schmidmühlen (DE); Renukachari, Kavyashree, 560043 Bangalore (IN); Schmitt, Jürgen, 90768 Fürth (DE)
(74) Representative: Siemens Patent Attorneys

(57) **Abstract**

A method of resource reservation in a network (D) comprising a plurality of network domains (D1, D2, D3), wherein at least one of the plurality of network domains (D1, D2, D3) is a radio network domain (D2), the method comprising the step of: reserving resources in the radio network domain (D2) based on one or more control messages destined for reserving resources in the at least one network domain (D1, D3) adjacent to the radio network (D2).

## Description

Independent of the grammatical term usage, individuals with male, female or other gender identities are included within the term.

### TECHNICAL FIELD

The present disclosure relates to the reservation of resources in networks comprising a plurality of network domains, wherein in particular one of the network domains is a radio network.

### BACKGROUND

Mobile radio or mobiles refer to wireless communications systems and devices which are based on radio frequencies and where the path of communications is movable. Such a radio network may comprise a fronthaul, a midhaul and a backhaul as well as a core network. In the fronthaul antennas are connected to processing units. The midhaul connects processing units to aggregation points. The backhaul connects the access network to the core network and the core network handles routing, mobility, security, and/or access to external networks, e.g., the internet, data services, etc.

In radio networks, such as 5G, the fronthaul often uses high-speed fiber link, e.g., using the CPRI/eCPRI protocol, to connect a radio unit, RU, to a distributed unit, DU, over Ethernet. In the midhaul and/or the backhaul also Ethernet and/or IP links are typically used. Therein, switches and routers are used for handling the traffic in the radio network.

### SUMMARY

Although real-time communication over other types of, e.g., cable-based, networks are currently the common solution, dynamic establishment of, in particular real-time, QoS-flows through radio networks, such as 5G networks, is currently not possible. That is, the current standardized solutions for real-time communication over radio networks, such as 5G, are not dynamic, i.e. only pre-configured, and limited to Layer 2, also comprising virtual Ethernet (adapters) that enable communication between logical partitions within the same system, even when no physical Ethernet adapters are available.

It is thus a desire to enable an, e.g., IP-based, and in particular real-time, communication with adequate resources over a radio network, such as 5G.

According to a first aspect a method of resource reservation in a network comprising a plurality of network domains is proposed. At least one of the plurality of network domains is a radio network domain. The method comprising the step of reserving resources in the radio network domain based on one or more control messages destined for reserving resources in the at least one network domain adjacent to the radio network.

According to a second aspect a radio network function is proposed. The radio network function operative to reserve resources in the radio network domain based on one or more control messages destined for reserving resources in at least one first network domain connected to the radio network domain.

According to a third aspect a radio network node comprising a computer program, e.g., a core network function, the computer program comprising program code that when executed performs the steps of reserving resources in the radio network domain based on one or more control messages destined for reserving resources in at least one first network domain connected to the radio network domain.

### BRIEF DESCRIPTION OF THE DRAWINGS

Figure 1 shows an illustration of a multi-domain network.
Figure 2 shows the IOS/OSI reference model for different protocols.
Figure 3 illustrates transmission of control messages over network domains and reservation of resources on different protocol layers.
Figure 4 illustrates the detection of control messages in the user plane of a radio network domain.
Figure 5 illustrates the reservation of resources in a network domain, and in particular in a network domain adjacent to the radio network.
Figures 6 to 9 illustrate exemplary method steps.

### DETAILED DESCRIPTION

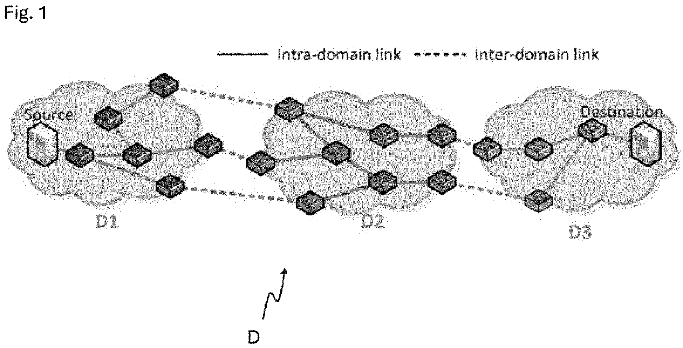

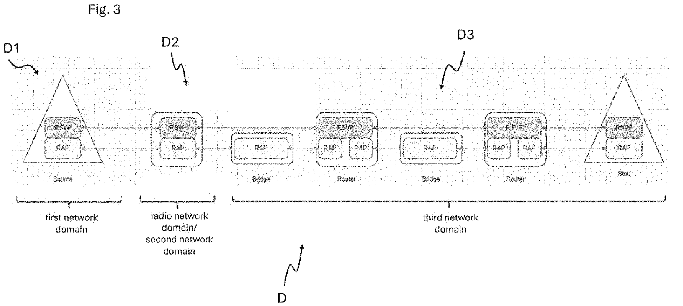

Figure 1 shows an example of multiple network domains D1, D2, D3 with a source and a destination (node). The figure shows internal and border nodes, intra-domain links, and inter-domain links. Therein each domain D1, D2, D3 may comprise a set of intra-domain paths linking the nodes of a domain to the border nodes of the domain. Furthermore, inter-domain links are illustrated by way of which the border nodes of different domains are connected. Hence, adjacent network domains are connected via border nodes. This of course also applies to the embodiments as described herein, e.g., wrt. Figures 3, 4 and 5.

Each domain may comprise a controller -not shown- that is responsible for routing packets within its domain independently from the other domains. As a result, the controller of a domain does not take into consideration routing decisions in other domains, and/or other domains' current state in terms of utilization and congestion, and/or the overall application performance requirements (e.g., bandwidth and end-to-end delay of the flows associated with the applications), and/or the monetary costs, i.e., the cost incurred when a flow uses one or multiple domains. As a result, it is not possible to guarantee the performance for network applications when their associated traffic flows cross different administrative domains. The terms stream and flow as used herein refer to the transmission and/or reception of data in network over a plurality of network nodes in one or more network domains.

A domain D1, D2, D3 can be seen as a logical grouping of network nodes, such as computers or other devices such as bridges, switches, or gateways, on the same or different kinds of networks. Each network node in a domain may be administered by a centralized controller, e.g., a server, that manages each network node within a domain. These network domains may be uniquely identified using unique domain names that are assigned by a domain controller. A domain controller may thus act as a server within a domain for the network nodes in the domain and provides the authentication services, domain names, and various functionalities to them. Hence, such as a domain controller may comprise one or more functionalities in particular for monitoring and/or controlling resources in the network domain.

A network node, e.g., in the form of a real or virtual device, connected in a domain can access any network node on that domain. On the Internet, network domains can be identified using the IP address. If two devices share some common part of the IP address, they are said to be in a common network domain. For example, if two devices have IP addresses - 192.168.10.2 and 192.168.10.3, then they are said to be in the same network domain. A domain can have multiple sub-domains. A router can be used to connect different networks, network domains, and/or sub-domains.

In multi-domain networks each domain D1, D2, D3 is usually administrated and managed by a single network operator. Unfortunately, network operators share minimal information with each other and do not collaborate much to improve their routing decisions and the overall performance of the resulting large-scale multi-domain network, cf. Collaborative Multi-domain Routing in SDN Environments, January 2022, Journal of Network and Systems Management 30(1), DOI:10.1007/s10922-021-09638-0. There is thus a need to solve this problem, and to efficiently route the incoming flows through the different domains while ensuring their performance requirements in terms of delay and/or bandwidth and/or maximizing the overall network utilization.

Now as the case may be, the domain D2 may be a radio network (domain), such as a 5G system, 5GS. This radio network (domain) may thus be a domain within a larger network comprising a plurality of domains such as domains D1 and D3. As mentioned, the different parts or domains of the network, such as domain D1, D2, D3, and even the sub-domains such as the 5G Core, the RAN, the Fronthaul, and/or the Midhaul, of the network may be administered by different operators, users, and/or in accordance with different computer programmed algorithms. In the example of Figure 1 domain D1 is adjacent to domain D2 -and vice versa. Furthermore domain D2 is adjacent to domain D3 and vice versa.

To meet various QoS requirements of applications in different markets, standards, such as the AVB and TSN standards, specify a set of mechanisms and/or protocols, most of which relate to queuing/transmission functions and resource reservation techniques. For example, the Resource Reservation Protocol, RSVP, is a transport layer protocol designed to reserve resources across a network (domain) using an integrated services model. RSVP operates over an IP protocol, such as IPv4 or IPv6, and may provide receiver-initiated setup of resource reservations for multicast or unicast data flows. Similarly to TCP and UDP, RSVP operates on (top of) the transport layer, e.g., above the network layer and/or the data link layer. The network layer may be implemented by the internet protocol, IP, and the data link layer may be implemented by Ethernet, a Token Ring or FDDI. Hence, the network layer and the data link layer protocols are subordinate to the RSVP protocol. In the layer above the transport layer, protocols such as FTP, SMTP, and/or DNS may operate on the application layer.

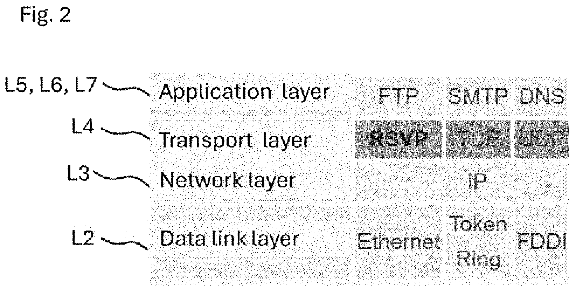

In Figure 2 the IOS/OSI reference model for different protocols is shown. The Resource Reservation Protocol, RSVP, is a transport layer protocol designed to reserve resources across a network (domain) using the integrated services model. RSVP operates over an IPv4 or IPv6 and provides receiver-initiated setup of resource reservations for multicast or unicast data flows. RSVP can be used by hosts and routers to request or deliver specific levels of quality of service, QoS, for application data streams. RSVP defines how applications place reservations and how they can relinquish the reserved resources once no longer required. RSVP operations will generally result in resources being reserved in each node along a path (between a source and a destination (node)). RSVP is not a routing protocol but was designed to interoperate with current and future routing protocols.

The Resource Reservation Protocol, RSVP, which is explained in RFC2210, is a signaling protocol that can be used by an application to inform its QoS requirements to an Internet infrastructure. RSVP is initiated by an application at the beginning of a communication session. A communication session is identified by a combination of the IP destination address, transport layer protocol type and the destination port number. 'RSVP' as used herein is meant to include any and all modifications of what is known as RSVP.

The resources reserved by the RSVP for a certain communication session will be used for all packets belonging to that particular session. Therefore, all RSVP packets will include details of the session they belong to. The main RSVP messages are the PATH and RESV messages. The PATH message is sent by a source that initiates the communication session and it explicitly binds the data path of a flow. Furthermore, it describes the capabilities of the source. The RESV message is issued by the receiver of the communication session and it follows exactly the path that the RSVP PATH message has followed hop by hop back to the communication session source. The RESV message on its way back to the source, may install QoS states at each hop. These states are associated with the specific QoS resource requirements of the destination. The RSVP reservation states are temporary states, i.e., soft states, that have to be updated regularly. This means that PATH and RESV messages will have to be periodically retransmitted. If these states are not refreshed then they will be removed.

The RSVP protocol uses additional messages that are used to either provide information about the QoS state or to explicitly delete the QoS states along the communication session path. This present disclosure envisages the use and application of RSVP protocol. Hence, such control messages as described herein can be used reserving (and/or relinquishing) resources in one or more network domains.

Turning to Figure 3 the Resource Allocation Protocol, RAP, conducts distributed resource reservation for streams across a, e.g., time-sensitive TSN, network in a manner comparable to the operation of Multiple Stream Reservation Protocol, MSRP. RAP is intended as an application to be built on top of the Link-local Registration Protocol, LRP, which is developed within the IEEE 802.1CS and provides enhanced support for larger databases than the Multiple Registration Protocol, MRP. More importantly, RAP adds support for configuration of TSN features in the fully distributed configuration model, where MSRP currently supports only AVB features.

The concept of "Reserved Streams" emerged in the development of the AVB standards as a solution to provide guaranteed QoS for audio/video streams. The used techniques include traffic shaping with the Credit-based Shaper, CBS, specified in the IEEE Std 802.1Qav-2009 and distributed resource allocation with a Stream Reservation Protocol, SRP, specified in the IEEE Std 802.1 Qat-2010. Such a combination enables dynamic resource allocation for streams that are transmitted with a specified traffic class (Stream Reservation Class A or B) using the CBS and provides automatic stream configuration with Plug-and-Play support for AVB networks.

RAP defines an LRP application that provides the stream registration and resource allocation service for the TSN streams. Unlike MSRP specifying only application-specific components within a common architecture that is defined by MRP for all MRP applications, RAP as a stand-alone protocol is cleanly separated in the architecture from the underlying LRP that provides port-local service with data transport and database synchronization functions on a point-to-point link.

In a, for example DetNet, scenario two end systems, i.e., source node and destination node, may be connected to a (DetNet) network, which contains multiple layer 2, L2, sub-networks that are interconnected by routers. A L2 sub-network, e.g., 802.1 TSN, is capable of providing DetNet compatible service for DetNet traffic. Offering the DetNet service with guaranteed latency and zero congestion loss to the data flow between the end systems requires resources to be reserved in all of the intermediate nodes including routers and bridges along the path of the flow. Intended as a Layer 2 protocol handling resource reservation within a bridged LAN, RAP can be employed in collaboration with a higher layer reservation protocol such as RSVP to reserve resources in such a mixed L2/L3 environment. There are generally two options for RSVP/RAP in-terworking, either in parallel or serial operation, which are distinguished by whether the higher layer information is carried by the L2 reservation protocol (i.e. RAP) across the L2 sub-network.

The parallel reservation can be viewed as a normal RSVP (end to end, from source to destination - also denoted as sink) signaling procedure running in the end systems and routers at Layer 3, L3, which triggers a RAP signaling process within the L2 sub-network. Interaction of two reservation protocols occurs at the ingress and egress of the L2 sub-network, where there are typically end systems or routers that implement both protocols and support functions such as mapping of attributes and coupling of signaling states, e.g. said border nodes as mentioned in the above in connection with Figure 1. Both RSVP and RAP flows physically pass through the L2 sub-network, which however is treated by the RSVP flow as a transparent L2 link between two RSVP peers. The parallel operation requires running both protocols in parallel on L2 and L3 in each L2 sub-network located between two L3 nodes. The interaction between two protocols is realized through the service primitives provided by the L2 protocol to the higher layer protocol, which achieves layer independence. In this way, no higher layer information, such as IP addresses, needs to be conveyed on the L2 control layer. The rules and operations needed for translating attributes and coupling states between two protocols need to be specified and executed by the higher layer protocol. This helps ease the workload of the L2 reservation protocol and allows RSVP to collaborate also with the existing MSRP in an AVB sub-network. Further details and an overview regarding the collaboration of RAP with upper Layer Reservation Protocol such as RSVP can be found in "Resource Allocation Protocol (RAP) based on LRP for Distributed Configuration of Time-Sensitive Streams", Version 0.2, November 2017, Feng Chen, Franz-Josef Goetz, Juergen Schmitt, Marcel Kiessling, https://www.ieee802.org/1/files/public/docs2017/tsn-chen-RAP-whitepaper-1117-v02.pdf.

As shown, the case may appear that the RSVP signaling, i.e. control messages, need to be sent from a source (node), such as an application on a UE, e.g., from a first network domain D1 via a second network domain D2, particularly a radio network, to a destination (node) or sink (node) in a third network domain D3. As the case may be, the one or more control messages may be transmitted by a node of or within the first or the second network domain. For example, the source node may be a user equipment, UE, or may located on a UE. Hence, in general the control messages may be transmitted by a network node of the network D. As the case may be (such) a network node may be in a first network domain D1, a second network domain D2 (i.e., said radio network domain), or a third network domain.

The third network domain D3 is adjacent to the radio network domain D2. The same applies to the first network domain D1 which is adjacent to the radio network domain D2. Hence, the control messages of the RSVP are sent over the radio network (domain). Hence, there is a network node RNN of the radio network domain and/or the first network domain transmitting said one or more control messages.

Hence, control message such as RSVP control messages or packets, e.g., as described herein, may be forwarded through a second network domain, e.g., through the default QoS flow established for a source, such as a UE, in a radio network (domain), e.g., said 5G system. However up to now there is no mechanism to also adapt the resources of the radio network (domain) automatically. Rather a manual reconfiguration was necessary.

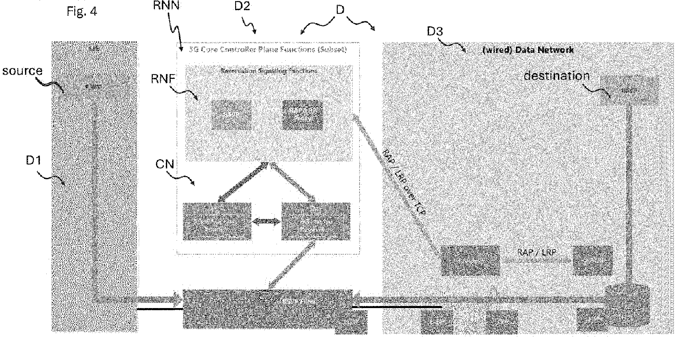

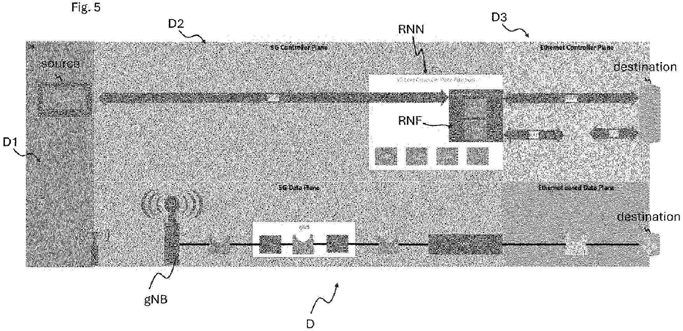

Turning to Figure 4 transmission of RSVP control messages over a radio network (domain) is illustrated. In order to automatically and/or dynamically adapt the resources, e.g., for a data stream and/or (real time QoS) flows, through a radio network, such as a 5G network, it is proposed to intercept the control messages in the radio network (domain) and to reserve the resources in the radio network (domain) accordingly. To that end, a filter, denoted as RSVP Filter in Figure 4, for control messages is proposed that identifies any such control messages (in the UPF). The filter may be part of, i.e., integrated in the user plane communication, over which the control messages are transmitted in the radio network (domain). The filter may filter the control messages from the user plane, e.g. a user plane function UPF, and forward them to the control plane, also referred to as controller plane in Figures 4 and 5. Instead or additionally the filter may fork the control messages, and/or may copy and/or duplicate the control messages. The filter may also upon identification of a control message trigger a control signal for adapting the resources in the radio network (domain). It should be understood that instead of the whole control message only part thereof, e.g., comprising one or more RSVP parameters and/or QoS parameters are filtered and/or forwarded (to the control plane). Hence, upon identification of the one or more control messages the control message or the relevant information for resource reservation and/or adaptation is processed by a resource reservation service, e.g., a network function, of the radio network (in the control plane). It should be understood that the control messages may not be forwarded to the adjacent network domain D3 over the user plane (function) of the radio network. Rather, in an embodiment, filtering may be understood as removing the control messages transmitted over the user plane (function) of the radio network (domain). Hence, the control information comprised in the control messages is used in the control plane of the radio network domain D2. The radio network domain may comprise a radio network function in the control plane, e.g., in the core network, to adapt the resource for transmitting the data stream or flow within the radio network domain. The radio network function RNF may also be operative to control the adaptation (or initiate the same) of resources in the adjacent network domain D3 based on the control information comprised in the one or more control messages.

For example, the control message may be processed by a Session Management Function, SMF, in the control plane of the radio network (domain), for example in the core network (of the radio network (domain)). The SMF is responsible for the session management on a per-session basis. The SMF handles session management. For example, session establishment, modification and release, including the tunnel between the User Plane Function, UPF, and the access network, AN., etc. as specified in 3GPP TS 23.501. Hence, via the SMF the control messages may be forwarded to a reservation function in the core network. The reservation function may process the control messages and extract the relevant information in order to adapt the resource in the radio network and/or in order to forward the control messages from the radio network to another network domain, i.e., the third network domain, e.g., a data network. In a radio network the PCF may serve for supporting a QoS policy, for providing policy rules for control plane functions, which include network slicing, roaming, and mobility management.

If a new reservation needs to be established or a reservation needs to be adapted or updated, the reservation function may send a request to the PCF. The Policy Control Function, PCF, is one of the control plane network functions of the core network (of the radio network (domain)). The PCF uses a policy for session management. This PCF may interface with the SMF via an N7 interface in order to trigger session management policies towards the SMF. The N7 interface is the reference point between the SMF and the Policy Control Function, PCF, during session establishment or modification. The SMF in turn controls the User plane Function, UPF, and translates policies that it receives from PCF to the information that the UPF understands and then forwards it to the UPF.

Thus, the PCF may map, e.g., by way of a "QoS Mapping Function", the one or more RSVP QoS parameters to resources of the radio network. For example, the one or more RSVP QoS parameters may be mapped to radio network QoS parameters. Thereupon a new policy, e.g., for the UE, may be created, adapted and/or updated, and sent to the SMF. SMF may then create one or more new QoS flows based on the received updated policy.

Now the one or more control message and/or one or more RSVP QoS parameters may be forwarded by the reservation function to the other network domain, e.g., said data network. Hence, for a data flow or data stream comprising one or more data packets a layer 2 stream must be established in the adjacent network domain. That is, if the data flow leaves the radio system into an adjacent network domain, such as a data network, the necessary resources also need to be provided, i.e., reserved, in the adjacent network domain. To do this dynamically, a RAP function, such as said RAP Proxy illustrated in Figure 4, may be integrated into the control plane of the radio network, cf. Figure 4. As described herein the necessary resources to be reserved on layer 2 of the adjacent network domain and/or respective parameters for transporting the stream or data flow in said adjacent network domain may be derived from the control message or respective RSVP QoS parameters. Hence, the proxy may serve for signaling, i.e., transmission of control messages from the radio network (domain) to the adjacent network (domain). As shown in Figure 4, the adjacent network domain may be a (cable-based) data network, and may correspond to said third network domain (of said plurality of network domains) as described herein. Hence thereby said adjacent network domain resources may be adjusted in order to fit and/or thus to correspond to radio network's QoS parameters. The RAP proxy may require LLDP information about the LRP communication endpoints, to be provided by the radio network (domain), e.g., by way of the core network or control plane, towards the adjacent (data) network. The Link Layer Discovery Protocol, LLDP, is a vendor-neutral link layer protocol used by network devices for advertising their identity, capabilities, and neighbors on a local area network based on IEEE 802 technology, principally wired Ethernet.

In Figure 5 another exemplary illustration of an embodiment is shown. As described herein, a UE or an application, for example in a capillary network behind the UE, may initiate a reservation of resources, e.g., for a data stream to be established between the UE and an endpoint, also referred to as destination or sink, such as another application or service or the like, in another network domain. The term "capillary network" is used in the context of the Internet of Things (IoT). A capillary network thus is a local network that provides local connectivity to things and devices. Therein the UE may serve as a gateway and/or router. Thus, one or more devices and/or applications may be connected to the UE (acting as a gateway). The UE may thus comprise software components for registration of the UE and the one or more capillary devices and/or applications, a LocalConnectivity Manager for locally managing the connectivity between devices and UE, and a proxy for relaying and distributing management commands etc. pp., cf. inter alia "Capillary Networks - Bridging the Cellular and loT Worlds", December 2015, DOI:10.1109/WF-IoT.2015.7389117.

Now for setting up, i.e. establishing a transmission and/or reception of one or more data packets, e.g., in the form of a ((new) data) stream and/or (QoS) flow, a reservation function of the UE may transmit one or more control messages for reserving resources in another network domain, which is e.g. the cable-based, as referred to as destination domain or third network domain. As shown, said control messages for reserving the resources in the destination domain are transmitted over a radio network (domain). In the embodiment the control messages are transmitted over the control plane of the radio network (domain). Alternatively, as described herein the control messages may be transmitted over the user plane of the radio network (domain). Now, in any case, in the control plane, the control messages are received and/or processed by a reservation function of the core network. The reservation function may initiate reservation of the layer 2 and or layer 3 resources for communication in the destination domain comprising the destination node of the control messages. As shown, the reservation function may comprise submod-ules for initiating resource reservation on the layer 2, e.g., using RAP, and/or layer 3, e.g., using RSVP. Hence, the resource reservation is performed based on such resource reservation in the destination domain. Hence, based on the control messages the resources for transmission over the radio network and the destination network are reserved for a transmission of respective data streams.

As a result, a transmission of one or more data packets, e.g., a data stream and/or a QoS flow, is established between the UE, as a source node, in a network domain and a destination node in the destination domain.

It should be understood, that the resources to be reserved in the destination network and/or the radio network (domain) comprise a bandwidth and/or bandwidth percentage, a buffer size (memory), a latency, and/or a priority in queues. These resources and their respective values may be indicated in the control messages sent, e.g., in the form of one or more parameters.

As the case may be, a plurality of network domains may be involved. Therein the different domains preferably relate to first network domain comprising a source node, such as a UE and/or an application, a radio network (domain), and a destination network (domain) comprising a destination node. The network domains may be administered by a different administration, e.g., by a radio network core network administrator and a network administrator of the destination network. The destination network may be an IP network connected to the radio network.

The one or more control messages may comprise an announcement, e.g., regarding a publication and/or subscription of one or more data packets. The control message may alternatively comprise a request and/or response, e.g., relating to a path message, an attach message, for example eina se of TSN, and/or a reserve message in case of the RSVP protocol.

A first resource reservation protocol on a transport layer or layer 4, such as RSVP, for reserving resources on a link layer or a layer 2 may be used. The reservation messages (also referred to as control messages) may thus be transmitted on layer 3 and/or resources may be reserved on layer 2. The radio network may be a regarded an abstract or virtual link layer that is connected to the destination network. Hence, in that view layer 2 resources are served in the radio network.

Hence, the resources in the radio network (domain) may comprise radio resource elements, RE, which are scheduled on the RAN, the resources on the radio network may also relate to resources when forwarding data in radio network, e.g., to the core network, and/or may comprise resources (to be configured) in the user plane and/or the user plane function, UPF.

For example, an on-demand reservation may occur and require additional or amended resources for data packet transmission, e.g., in case a new (real-time) data stream to be treated with according priority in the network is to be established. Such may be the case in dynamic production scenarios comprising mobile machines and/or the re-start of machines. Furthermore, when initiating a production step or sequence, one or more data streams need to be established. For example, in case of a change of machine tool new data may need to be transmitted to a newly instantiated application. In a radio network (domain), such as 5GS, a Quality of Service, QoS, model is based on QoS flows. Each QoS flow has a unique identifier called QoS Flow Identifier, QFI. There are two types of flows: Guaranteed Bit Rate (GBR) QoS Flows and Non-GBR QoS Flows. The QoS Flow is the finest granularity of QoS differentiation in the PDU Session. User Plane traffic with the same QFI receive the same forwarding treatment in terms of resources. At the Non-Access Stratum, NAS, packet filters in UE and core network map UL and DL packets respectively to QoS flows. At the Access Stratum, AS, rules in UE and Access Network, AN, map QoS flows to Data Radio Bearers, DRBs. Every QoS flow has a QoS profile that includes QoS parameters and QoS characteristics. Applicable parameters depend on GBR or non-GBR flow type. QoS characteristics may be standardized and/or dynamically configured as described herein.

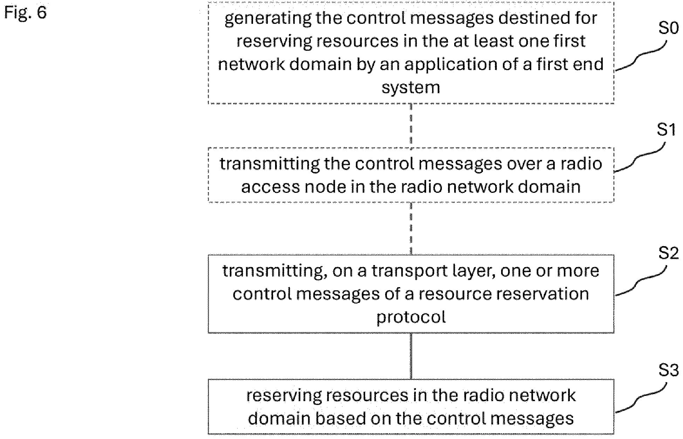

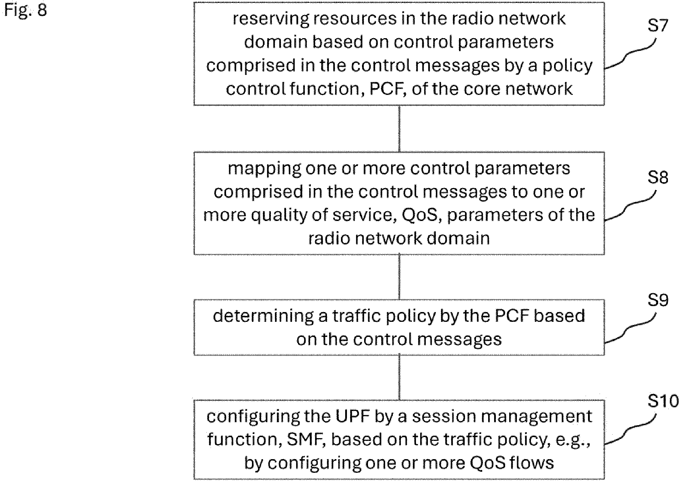

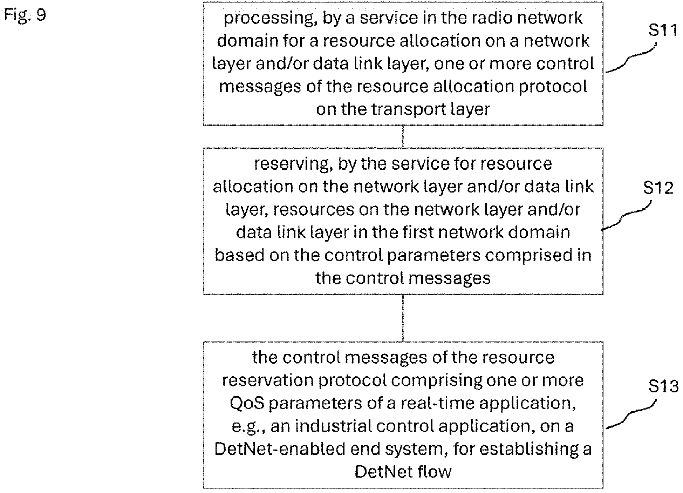

A plurality of well combinable embodiments highlighting different aspect of the present disclosure is presented in Figures 6 to 9. As described herein, a network may comprise a plurality of domains, e.g., a first and a second domain, a second and third domain, or a first, second, and a third domain, or even further network domains. Successive domains are adjacent to each other. Therein, the second domain may be a radio network, or in case the radio network is part of a larger overall network a radio network domain within said larger overall network.

Now, one or more control messages destined for reserving resources in the at least one adjacent network domain may be generated in a step S0 by an application of a first end system, for example in one of the network domains, e.g., for an on-demand reservation. The first end system may reside in a first network domain, e.g., a cable-based network (domain) or a capillary network as described herein. Hence, an application, e.g., in said capillary network, may initiate reservation of resources for a data stream or flow to be transmitted to a second end system in another network domain, e.g., said third (cable-based) network domain, i.e., said adjacent network domain. Said reservation is initiated, controlled, and/or monitored by one or more control messages.

As the case may be, the one or more control messages may be transmitted in a step S1 over a radio access node in the radio network domain. That is, there may be an air interface between the UE as a first end system and the radio network (domain), e.g., in the form of a radio access network. Thus, the reservation of resources in the radio network domain may comprise the adaptation of radio resources, i.e., resource elements for radio transmission over the air, as well the reservation of resources in the fronthaul. Hence, the UE may be regarded as a border node of a network domain and the radio unit of the fronthaul may be regarded as a border node of the radio network (domain).

Now in a step S2, preferably in the radio network domain, the one or more control messages are transmitted on a transport layer, cf. OSI/ISO reference layers, e.g., in Figure 2. As described herein, the one or more control messages belong to a resource reservation protocol for reserving resources on a subordinate layer, i.e., subordinate to the transport layer, e.g., a network layer and/or a data link layer. It should be understood that the one or more control messages are intended to reserve resources in at least one third network domain, i.e., other than the radio network (domain) and or the network domain of the first end system, e.g., said UE. The control messages are thus transmitted (from a network domain of the first end system, where the one or more control messages are generated) over a radio network (domain), for example to be received by one or more nodes, e.g., said destination or sink, in the third network domain.

It is proposed herein to reserve resources in a step S3 in the radio network domain based on the control messages destined for reserving resources in the at least one first network domain. That is, use is made of the information transported in the radio network (domain) in order to adapt the transmission path and/or the resources along that transmission path in the radio network, e.g. for transporting the stream of flow of data from the application of the first end system. Hence, the control messages may be evaluated with in the radio network (domain) to control the resources for data transmission within the radio network even though said one or more control messages relate to the reservation of resources outside said radio network (domain), i.e., reservation of resources in the adjacent network domain.

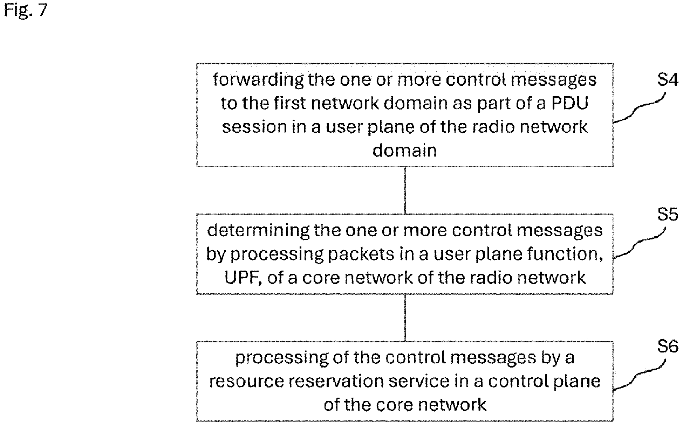

Thus, turning to Figure 7, the one or more control messages may be forwarded to the third network domain, i.e., an adjacent network domain, as part of a packet data unit, PDU, session in a user plane of the radio network domain in a step S4. The user plane thus carries and transports the one or more control message in the radio network (domain), e.g., instead of the control plane in the radio network.

Thereupon, the one or more control messages may be determined or identified by processing packets in a user plane function, UPF, of a core network of the radio network in a step S5. That is the user plane traffic may be processed, e.g., tapped, in order to identify the one or more control messages. The one or more control messages may be forwarded to the core network of the radio network (domain) in order to be processed by one or more network function therein. As the case may be the one or more control messages or the relevant information therein may be forked or copied from the user plane traffic in the radio network (domain).

Hence, the control messages may then be processed in a step S6 by a resource reservation service in a control plane of the core network. Said service may be responsible for reserving, managing and/or controlling or monitoring the resources in the radio network (domain). In particular the radio resources and/or the fronthaul resources and/or the core resources may be reserved, managed and/or controlled, or monitored by said core service, e.g., in the form of a network function.

Thus, by processing the one or more control messages one or more control parameters may be determined, e.g., by said RSVP Filter or said network function in the core network. Hence, resources may be reserved in the radio network domain based on control parameters comprised in the control messages or derived from the control messages, e.g., by a policy control function, PCF, for example in the core network, in a step S7.

Such resource reservation based on the one or more control messages may comprise mapping one or more control parameters comprised in the control messages to one or more quality of service, QoS, parameters of the radio network (domain) in a step S8.

Thus, in a step a traffic policy may be determined by the PCF based on the control messages in a step S9. Thereupon, the UPF may be configured in a step S10 by a session management function, SMF, based on the traffic policy, e.g., by configuring one or more QoS flows.

In a step S11 one or more control messages of the resource allocation protocol on the transport layer may be processed by a service in the radio network domain for a resource allocation on a subordinate layer, e.g., network layer and/or data link layer. In addition, resources on the network layer and/or data link layer in the first network domain may be reserved by the service for resource allocation on the subordinate layer, e.g., said network layer and/or data link layer, based on the control parameters comprised in the control messages in a step S12.

Thus, the one or more control messages of the resource reservation protocol may comprise one or more QoS parameters of a real-time application, e.g., an industrial control application, on a DetNet-enabled end system, for establishing a DetNet flow in a step S13.

Furthermore, a radio network function operative to reserve resources in the radio network domain based on one or more control messages destined for reserving resources in at least one adjacent network domain connected to the radio network domain. The radio network function according may comprise a UPF operative to determine the one or more control messages by processing packets in a user plane function, UPF, of a core network of the radio network.

Still further, a radio network node RNN, i.e., an apparatus, preferably comprising processor and/or a memory, is proposed. The radio network node may comprise a computer program, e.g., a core network 5G Core function, the computer program comprising program code that when executed performs the steps of reserving resources in the radio network domain based on one or more control messages destined for reserving resources in at least one first network domain connected to the radio network domain.

As mentioned herein the control messages of the resource reservation protocol may comprising one or more QoS parameters of a real-time application, e.g., an industrial control application, on a DetNet-enabled end system, for establishing a DetNet flow.

As described herein, the one or more control messages may be transmitted over a radio access node, gNB, in the radio network domain D2, e.g., in order to enter the radio network domain. Said transmission may be initiated from a source node on a UE, e.g., an application implementing a resource reservation protocol, such as RSVP. The one or more control messages may be destined for a destination node, e.g., also an application, implementing the resource reservation protocol. Said destination node is located in a network domain adjacent to the radio network domain.

## Claims

1. A method of resource reservation in a network (D) comprising a plurality of network domains (D1, D2, D3), wherein at least one of the plurality of network domains (D1, D2, D3) is a radio network domain (D2), the method comprising the step of:
reserving resources in the radio network domain (D2) based on one or more control messages destined for reserving resources in the at least one network domain (D1, D3) adjacent to the radio network (D2).

2. The method according to the preceding claim, comprising the step of:
transmitting, on a superordinate layer, such as a transport layer (L4), for example of a first network domain (D1) of the plurality of network domains, one or more control messages of a resource reservation protocol for reserving resources in the adjacent network domain (D3) over the radio network domain (D2).

3. The method according to any one of the preceding claims,
wherein the one or more control messages serve for reserving resources on a subordinate layer (L3, L2), e.g., network layer and/or data link layer, in particular in the adjacent network domain, and/or wherein the one or more control messages are destined for resource reservation in the at least one network domain (D3) adjacent to the radio network domain (D2).

4. The method according to any one of the preceding claims, comprising the step of:
generating the control messages destined for reserving resources in the at least one adjacent network domain by an application of a first end system, e.g., for an on-demand reservation, in a first network domain, e.g., an application in a capillary network.

5. The method according to any one of the preceding claims, comprising the step of:
forwarding the one or more control messages to the adjacent network domain (D3) as part of a packet data unit, PDU, session in a user plane (UPF) of the radio network domain (D2).

6. The method according to any one of the preceding claims, comprising the step of:
determining the one or more control messages by processing packets in a user plane function (UPF) of a core network (CN) of the radio network domain (D2).

7. The method according to any one of the preceding claims, comprising the step of:
processing of the control messages by a resource reservation service (RNF) in a control plane (CN), e.g., in the core network, of the radio network domain (D2).

8. The method according to any one of the preceding claims, comprising the step of:
reserving resources in the radio network domain (D2) based on control parameters comprised in the one or more control messages by a policy control function (PCF) of the core network.

9. The method according to any one of the preceding claims, comprising the step of:
mapping one or more control parameters comprised in the one or more control messages to one or more quality of service, QoS, parameters of the radio network domain (D2).

10. The method according to any one of the preceding claims, comprising the step of:
determining a traffic policy by the policy control function (PCF) based on the one or more control messages.

11. The method according to any one of the preceding claims, comprising the step of:
configuring the user plane, preferably the user plane function (UPF), by a session management function (SMF) based on the traffic policy, e.g., by configuring one or more QoS flows.

12. The method according any one of the preceding claims, comprising the step of:
processing, by a service (RNF, PCF, SMF) in the radio network domain (D2) for a resource allocation on a subordinate layer (L3, L2), such as a network layer and/or a data link layer,
one or more control messages of the resource allocation protocol on the superordinate layer (L4), e.g., said transport layer, and/or
reserving, by the service for resource allocation on the subordinate layer (L3, L4), e.g., said network layer and/or data link layer, resources in the adjacent network domain (D3) based on the control parameters comprised in the control messages,

13. A radio network function (RNF) operative to reserve resources in the radio network domain (D2) based on one or more control messages destined for reserving resources in at least one adjacent network domain (D1, D3) connected to the radio network domain (D2).

14. The radio network function (RNF) according to the preceding claim comprising a user plane (UPF), preferably a user plane function, operative to determine the one or more control messages by processing packets in the user plane, preferably said use plane function, of a core network (CN) of the radio network domain (D2).

15. A radio network node (RNN) comprising a computer program, e.g., in a core network (CN) , the computer program comprising program code that when executed performs the steps of reserving resources in the radio network domain (D2) based on one or more control messages destined for reserving resources in at least one adjacent network domain (D1, D3) connected to the radio network domain (D2).
